# EUROPÄISCHE PATENTSCHRIFT

(11) **EP 4 392 348 B1**
(45) Veröffentlichungstag und Bekanntmachung des Hinweises auf die Patenterteilung: **25.11.2026**
(21) Anmeldenummer: 22748252.8
(22) Anmeldetag: 19.07.2022
(51) Int. Cl.: B65G 1/04, B65G 1/06, B66F 9/06, B66F 9/18

(54) **SELBSTFAHRENDER WAGEN FÜR EIN LAGERSYSTEM MIT HALTEVORRICHTUNG FÜR BEHÄLTER**
SELF-DRIVING WAGON FOR A STORAGE SYSTEM WITH RETAINING DEVICE FOR CONTAINERS
VÉHICULE AUTONOME POUR UN SYSTÈME DE STOCKAGE AVEC DISPOSITIF DE RETENUE POUR CONTENEURS

(30) Priorität: 24.08.2021 DE 102021209280
(43) Veröffentlichungstag der Anmeldung: 03.07.2024
(73) Patentinhaber: stow Robotics GmbH, 63868 Großwallstadt (DE)
(72) Erfinder: HEDDINGA, Matthias, 23628 Krummesse (DE)
(74) Vertreter: Patentanwälte Hemmer Lindfeld Frese Partnerschaft mbB
(86) Internationale Anmeldenummer: PCT/DE2022/200160
(87) Internationale Veröffentlichungsnummer: WO 2023/025357

(56) Entgegenhaltungen:
- EP-A2- 3 456 663
- WO-A1-2021/059006
- CA-A1- 3 117 483
- CN-U- 209 481 103
- DE-A1- 102017 202 811
- DE-U1- 202004 007 438
- JP-A- 2007 217 076
- US-A1- 2019 129 371

## Beschreibung

Die Erfindung betrifft einen selbstfahrenden Wagen zum automatischen Ein- und Auslagern von Behältern in einer Lagergestellanordnung mit den im Oberbegriff des Anspruchs 1 angegebenen Merkmalen sowie ein Lagersystem mit einem derartigen Wagen und einer Fahrtrassenanordnung.

Automatische Lagersysteme mit selbstfahrenden Wagen sind im Stand der Technik bekannt. Derartige Lagersysteme weisen mehrere Lagerebenen auf, die von den Wagen durch einen Lift oder Rampen erreicht werden können. Beispielsweise offenbart die WO2021059006A1 ein Lagersystem mit auf Fahrtrassen selbstfahrenden Wagen zum automatischen Ein- und Auslagern von Behältern in einer Lagergestellanordnung, wobei der Wagen einen ersten Radsatz zum Antrieb entlang einer ersten Achse und einen zweiten Radsatzzum Antrieb entlang einer zweiten, sich quer zur ersten Achse erstreckenden Achse umfasst. Mindestens einer des ersten Radsatzes und des zweiten Radsatzes ist im Wesentlichen vertikal zwischen einer Antriebsposition und einer Leerlaufposition bewegbar. Der Wagen weist eine Auflagefläche zum Tragen einer Bodenfläche eines Behälters auf. EP 3 456 663 A2 offenbart einen selbstfahrenden Wagen nach dem Oberbegriff des Anspruchs 1.

Das Fahrtrassensystem kann selbstfahrende Wagen aufweisen, das zu bewegende Behälter innerhalb ihrer Hüllkurve aufnimmt, insbesondere durch Unterfahren und Anheben, sodass keine Freimaße zwischen neben- oder hintereinander gelagerten Behältern erforderlich sind. Hierbei ist es sinnvoll, dass auch Behälter mit glatten Böden auf dem Wagen fixiert sind, um ein Verrutschen oder Abkippen des Behälters im Falle eines Nothaltes oder anderen Einflüssen zu verhindern. Die US 2019/129371 A1 beschreibt beispielsweise ein automatisiertes Transportsystem mit Sicherungselementen zum Sichern eines Transportbehälters auf einem Transportwagen. In WO2021059006A1 wird vorgeschlagen, dass der Wagen ein Zentrier- und Sicherungssystem zum Zentrieren und Sichern eines Behälters auf einer Auflagefläche mit mindestens zwei Eingriffselementen umfasst, die gleichzeitig in entgegengesetzten Richtungen zueinander zwischen einer Neutralposition und einer Sicherungsposition bewegbar sind, wobei die Eingriffselemente so konfiguriert sind, dass sie in der Sicherungsposition mit dem Behälter in Eingriff kommen, um den Behälter auf der Auflagefläche zu sichern. Dies erfordert jedoch eine vergleichsweise aufwändige Mechanik.

Außerdem müssen die Behälter zur Aufnahme der Eingriffselemente speziell ausgebildet und an den Wagen angepasst sein. In standardisierte, bereits auf dem Markt befindliche Behälter können die Eingriffselemente nicht ohne Weiteres in Eingriff kommen.

Vor diesem Hintergrund liegt der Erfindung die Aufgabe zugrunde, einen selbstfahrenden Wagen bzw. ein Lagersystem zu verbessern und eine einfachere und dennoch effektive Sicherung von Behältern zu ermöglichen, ohne die Behälter speziell an die Wagen anpassen zu müssen.

Diese Aufgabe wird gemäß der Erfindung durch einen selbstfahrenden Wagen mit den in Anspruch 1 angegebenen Merkmalen erreicht. Vorteilhafte Ausgestaltungen der Erfindung sind in den Unteransprüchen, der nachfolgenden Beschreibung und den Zeichnungen angegeben.

Es wird ein selbstfahrender Wagen zum automatischen Ein- und Auslagern von Behältern in einer Lagergestellanordnung vorgeschlagen, wobei der Wagen einen Rahmen mit einer Unterseite und einer Oberseite aufweist, wobei der Wagen an der Unterseite einen ersten Radsatz zum Antrieb entlang einer ersten Achse und einen zweiten Radsatz zum Antrieb entlang einer quer zur ersten Achse verlaufenden zweiten Achse aufweist, und wobei der Wagen an der Oberseite einen anheb- und absenkbaren Hubtisch mit einer Auflagefläche zum Tragen einer Bodenfläche eines Behälters aufweist. Es ist vorgesehen, dass der Wagen zum Verhindern des Abrutschens des betreffenden Behälters eine Haltevorrichtung mit randseitig an der Auflagefläche angrenzenden Halteflächen aufweist, die zumindest teilweise und zumindest zeitweise von der Auflagefläche abstehen.

Der selbstfahrende Wagen umfasst einen Rahmen, an dem die beiden Radsätze angeordnet sind. Der Rahmen bildet die Basis des Wagens und kann auf unterschiedliche Arten gestaltet sein. Es ist besonders bevorzugt, wenn der Rahmen möglichst flach ausgebildet ist, sodass der selbstfahrende Wagen insgesamt eine sehr flache Form besitzt. Dadurch ist es möglich, unter einen Behälter, der auf einer Aufstandsfläche steht, zu fahren und durch Anheben des Hubtischs aufzunehmen. Je flacher der selbstfahrende Wagen ist, desto platzsparender können die einzelnen Behälter platziert werden. Der Rahmen kann weiterhin einen oder mehrere Motoren zum Antreiben der Radsätze umfassen.

Mindestens einer des ersten Radsatzes und des zweiten Radsatzes könnte im Wesentlichen vertikal zwischen einer Antriebsstellung und einer Ruhestellung bewegbar sein. Durch eine entsprechende Ansteuerung des selbstfahrenden Wagens kann selektiv der erste Radsatz oder der zweite Radsatz so bewegt und angetrieben werden, dass der Wagen in die gewünschte Richtung auf der Fahrtrassenanordnung fahren kann.

Der Hubtisch ist vertikal bewegbar an dem Rahmen angeordnet. Dies bedeutet, dass der Hubtisch in einer Richtung verfahrbar ist, die im Wesentlichen parallel zu einer Flächennormalen der Auflagefläche verläuft. Der Rahmen umfasst zudem einen Hebemechanismus, der zum Anheben des Hubtischs geeignet ist. Denkbar sind beispielsweise pneumatische oder hydraulische Aktuatoren, die durch Öffnen und Schließen von Ventilen ein Anheben oder Absenken des Hubtischs über einen Hubzylinder ermöglichen. Es sind jedoch auch elektrische bzw. elektromagnetische Einrichtungen hierzu denkbar.

Behälter, die auf die Auflagefläche gestellt werden, können an ihrer Unterseite einen sogenannten Stapelrand mit einem Absatz und einer gegenüber der Außenkontur verkleinerten Auflagefläche aufweisen, durch den die Behälter ineinander bzw. aufeinander stapelbar sind. Dies ist jedoch nicht zwangsläufig notwendig und der selbstfahrende Wagen kann auch zum Bewegen anderer Behälter verwendet werden, die an ihrer Unterseite keinen Absatz bzw. Stapelrand aufweisen.

Zum Verhindern des Herunterrutschens oder Abkippens des Behälters von der Auflagefläche ist vorgesehen, dass der Hubtisch zumindest an Teilen der Haltefläche mit einem durchgehenden oder unterbrochenen Rand versehen ist. Dieser wird in Form der Haltevorrichtung mit Halteflächen bereitgestellt. Die Halteflächen stehen zumindest teilweise und zumindest zeitweise von der Auflagefläche ab. Der Stapelrand des Behälters und/oder seine untere Flächenkonturwird durch die Haltevorrichtung umgriffen bzw. umschlossen, sodass ein Herunterrutschen des Behälters relativ zu dem Wagen verhindert wird. Dabei ist grundsätzlich denkbar, dass die Halteflächen permanent von der Auflagefläche abstehen oder selektiv in ihre von der Haltefläche abstehende Halteposition gebracht werden. Liegt eine permanente Anordnung der Halteflächen vor, stehen die Halteflächen stets von der Auflagefläche ab und der Gesamthub des Hubtischs zum Aufnehmen des Behälters muss daher um das vertikale Maß der Halteflächen erhöht werden. Starr fixierte Halteflächen sind insoweit nachteilig, da im Lagergestell ein entsprechend größerer Raum unterhalb der gelagerten Behälter freigehalten werden müsste zum Unterfahren der Behälter mit dem selbstfahrenden Wagen. Vorteilhaft sind dagegen, wie weiter unten beschrieben, bewegliche Halteflächen, die zumindest zeitweise zum Unterfahren der Behälter so positioniert sind, dass sie zweitweise nicht vertikal über die Auflagefläche ragen, selbst wenn sich die Auflagefläche gerade in einer eingefahrenen unteren Position befindet.

Unterfährt der selbstfahrende Wagen einen auf einer Aufstandsfläche eines Lagergestells befindlichen Behälter, ist der Hubtisch bevorzugt vollständig herunterzufahren, sodass sich die Halteflächen unter dem Behälter befinden und bevorzugt nicht über den Wagen herausstehen. Befindet sich der Wagen unterhalb des aufzunehmenden Behälters, wird der Hubtisch wieder ausgefahren, sodass die Halteflächen den Behälter an dessen Unterseite umgeben und dann vor dem Herunterrutschen sichern.

Ein Winkel zwischen der Auflagefläche und den jeweiligen Halteflächen könnte in einem Bereich von 120° bis 165° liegen. Die betreffenden Halteflächen ragen daher von der Auflagefläche um 30° bis 75° über die Vertikale hinaus. Wird ein Behälter durch den Hubtisch angehoben, könnte eine Kante des Behälters mit einer Auflagefläche in Kontakt geraten. Durch die schräge Anordnung der kontaktierten Haltefläche rutscht die betreffende Kante des Behälters in Richtung des Zentrums der Auflagefläche. Die Haltevorrichtung fungiert demnach auch als eine mechanisch sehr einfache und dennoch effektive Zentriervorrichtung. Der Behälter kann sich durch sein Eigengewicht schon beim Anheben oder später durch eine fahrtinduzierte Vibration selbst zentrieren. Dabei kann der Behälter ein größenmäßig standardisierter Behälter sein, der nicht an den Wagen angepasst werden muss.

Mindestens eine der Halteflächen ist erfindungsgemäß bewegbar gelagert und in eine Freigabeposition und eine Halteposition bringbar, wobei die mindestens eine der Halteflächen in der Halteposition über die Auflagefläche ragt und einen Winkel von mindestens 120° und höchstens 165° zu der Auflagefläche einschließt, und wobei die mindestens eine der Halteflächen in der Freigabeposition im Wesentlichen nicht über die Auflagefläche ragt. Die betreffenden Halteflächen können demnach erst dann in eine von der Auflagefläche schräg abstehende Position, die hier Halteposition genannt ist, bewegt werden, wenn der Behälter aufgenommen ist oder im Begriff ist, aufgenommen zu werden. Die Winkelangabe bezieht sich auf eine in der Halteposition zu der Auflagefläche schräggestellte Anordnung der Halteflächen.

Die mindestens eine der Halteflächen könnte jeweils eine Außenkante und eine Innenkante aufweisen, und die Außenkante könnte zum Einnehmen der Halteposition gegenüber der Innenkante anhebbar sein. Die Innenkante könnte beispielsweise schwenkbar gelagert sein, sodass allein durch das Auf- oder Abbewegen der Außenkante eine Bewegung in die Halteposition oder eine Neutralposition erreichbar ist. Diese Lösung ist mechanisch sehr einfach und führt zu einem nur geringen Wartungsbedarf. Das Bewegen der Außenkante kann aktiv oder passiv erfolgen. Während die aktive Variante einen separaten Aktuator erfordert, kann bei der passiven Variante eine Kopplung mit einem anderen, bewegbaren Element ausgenutzt werden.

Mindestens eine der Halteflächen könnte an ihrer jeweiligen Innenkante schwenkbar mit dem Rahmen verbunden sein. Die Innenkante ist damit örtlich festgelegt und zum Verschwenken der Haltefläche genügt das Bewegen eines von der Innenkante beabstandeten Teils der betreffenden Haltefläche. Die betreffende Haltefläche könnte mittels eines oder mehrerer, entlang der Innenkante verteilten Scharniere mit dem Rahmen verbunden sein.

In einer besonders vorteilhaften Ausführungsform ist die mindestens eine der Halteflächen bewegbar mit dem Rahmen und dem Hubtisch gekoppelt, sodass sie beim Anheben des Hubtischs in die Halteposition und beim Absenken des Hubtischs in die Freigabeposition bewegt wird. Da der Hubtisch zum Anheben und Absetzen des Behälters bewegt werden muss, kann das Koppeln des Hubtischs mit der betreffenden Haltefläche auch dazu genutzt werden, mechanisch einfach und effektiv die betreffende Haltefläche zu bewegen.

Vorzugsweise fährt der Wagen die Behälter in einer Hochstellung des Hubtisches, bei der die entsprechend gekoppelten Halteflächen in der Halteposition sind. Alternativ dazu können die Halteflächen unabhängig vom Hubtisch bewegbar sein, also von dessen Bewegung entkoppelt sein, sodass die Halteflächen auch in einer Tiefstellung des Hubtisches in die Halteposition gestellt werden können, um die Behälter in der Tiefstellung des Hubtisches gesichert fahren zu können. Dies kann den Vorteil haben, dass der Schwerpunkt des Wagens mit Behälter beim Transport tiefer liegt.

Die mindestens eine der Halteflächen könnte jeweils eine Schwenkachse aufweisen, die zwischen der jeweiligen Innenkante und der Außenkante liegt, wobei vorzugsweise die mindestens eine der Halteflächen an der Schwenkachse mit dem Hubtisch schwenkbar gelagert ist. Die Bewegung der betreffenden Haltefläche muss nicht direkt an einer Außenkante erfolgen. Vielmehr ist es sinnvoll, durch eine zwischen der Außenkante und der Innenkante liegende Schwenkachse eine in die Haltefläche eingeleitete Bewegung zu verstärken. Je näher die Schwenkachse an der Innenkante liegt, desto stärker kann sich bei unveränderter Bewegung des Hubtischs die Außenkante der betreffenden Haltefläche bewegen.

Die jeweilige Innenkante könnte jeweils mittels mindestens eines lateral verschiebbaren Schwenklagers an dem Rahmen angeordnet sein. Durch die Kopplung zweier Punkte der betreffenden Haltefläche, die einen festen Abstand zueinander aufweisen, an eine vertikale Bewegung zum Einleiten einer Schwenkbewegung ist es erforderlich, eine Ausweichbewegung eines der Lager zu ermöglichen. Da der Rahmen unbewegt ist, ist es sinnvoll, das Schwenklager an dem Rahmen verschiebbar zu lagern. Der Rahmen könnte hierzu etwa ein Langloch oder eine Linearführung zur Aufnahme des Schwenklagers aufweisen. Bei einer Ausfahrbewegung des Hubtischs kann das betreffende Schwenklager lateral nach außen bewegt werden, während bei einer Einfahrbewegung das betreffende Schwenklager lateral nach innen bewegt wird.

Alternativ kann selbstverständlich auch die mindestens eine der Halteflächen jeweils mittels mindestens eine lateral verschiebbaren Schwenklagers an dem Hubtisch schwenkbar gelagert sein.

Es ist weiterhin denkbar, dass mindestens eine der Halteflächen mittels einer an dem Rahmen angeordneten Bewegungsvorrichtung verschwenkbar ist. Die Bewegungsvorrichtung ist insbesondere eine aktive Bewegungsvorrichtung und kann als Aktuator verstanden werden. Dieser könnte elektrisch, pneumatisch, elektromagnetisch oder hydraulisch ausgeführt sein. Es ist vorstellbar, dass der selbstfahrende Wagen sowohl aktiv bewegbare Halteflächen als auch passiv bewegbare Halteflächen umfasst.

Bevorzugt sind an zumindest zwei einander entgegengesetzten Seiten der Auflagefläche Halteflächen vorgesehen, wobei die Auflagefläche und die Halteflächen zumindest zeitweise eine sich nach oben aufweitende Wanne bilden. Die entgegengesetzten Seiten können insbesondere eine Vorderseite und eine Rückseite in einer Hauptbewegungsrichtung des selbstfahrenden Wagens umfassen, wobei insbesondere Schrägflächen bzw. Rampen in dieser Hauptbewegungsrichtung bewältigt werden. Selbstverständlich ist es auch denkbar oder sinnvoll, bei komplexeren Bewegungsabläufen auch drei oder vier Seiten der Auflagefläche mit Halteflächen auszustatten.

Mindestens eine der Halteflächen könnte an einem von der Auflagefläche abgewandten Bereich zu der Auflagefläche hin abgeknickt oder gewölbt sein. Damit wird das Halten der Behälter noch weiter verbessert.

Die Erfindung betrifft ferner ein Lagersystem, aufweisend eine Fahrtrassenanordnung mit mehreren Fahrtrassensträngen, auf der Fahrtrassenanordnung selbstfahrende Wagen nach der vorhergehenden Beschreibung zum automatischen Ein- und Auslagern von Behältern in einer mit der Fahrtrassenanordnung koppelbaren Lagergestellanordnung, und auf den selbstfahrenden Wagen platzierbare Behälter, die in der Lagergestellanordnung abstellbar sind.

Die Fahrtrassenstränge können eine gitterartige Struktur aus längs und quer zueinander angeordneten Fahrtrassensträngen bilden, die in mehreren Ebenen übereinander angeordnet sind. Die einzelnen Ebenen könnten durch Schrägflächen bzw. Rampen oder andere geneigte Abschnitte miteinander verbunden sein. Die Fahrtrassenanordnung könnte sich an einem Hochregal befinden und dazu ausgeführt sein, das Befahren der Fahrtrassenstränge durch die selbstfahrenden Wagen zum Erreichen aller Fächer des Hochregals zu ermöglichen, um dort Behälter abzulegen bzw. aufzunehmen.

Das Lagersystem könnte ferner Niederhalter aufweisen, die zumindest teilweise oberhalb von geneigten Abschnitten der Fahrtrassenstränge angeordnet sind, wobei ein senkrecht zu dem betreffenden Fahrtrassenstrang gemessener Abstand zwischen dem Fahrtrassenstrang und dem betreffenden Niederhalter eine Höhe des betreffenden Wagens mit darauf befindlichem Behälter derart übersteigt, dass der betreffende Behälter um einen Winkel von höchstens 20° zu der Auflagefläche kippen kann, ohne an dem betreffenden Niederhalter anzustoßen. Dies ist eine mechanisch besonders einfache Möglichkeit, einen Behälter vor dem Abkippen eines selbstfahren-den Wagens während der Fahrt auf einer Rampe zu bewahren. Wird dieser durch eine abrupte Fahrbewegung auf einem geneigten Abschnitt leicht von der Auflagefläche gekippt, kann der Behälter mit einer oberen Kante nach oben von der Auflagefläche ausweichen. Dort ist ein Niederhalter angeordnet, der von der betreffenden Kante berührt wird. Die Kippbewegung des Behälters wird folglich begrenzt und der Behälter kann sich nach dem Anstoßen des Niederhalters wieder auf die Auflagefläche legen. Der Niederhalter kann durch die Unterseite eines in einer Etage höher verlaufenden Fahrtrassenstrangs des Lagersystems gebildet sein.

Die Erfindung ist nachfolgend anhand von in den Zeichnungen dargestellten Ausführungsbeispielen näher erläutert. Es zeigen:
Fig. 1 und 2 zeigen einen selbstfahrenden Wagen gemäß dem Stand der Technik.
Fig. 3 bis 7d zeigen unterschiedliche Ausführungsbeispiele eines erfindungsgemäßen Wagens.
Fig. 8 bis 9b zeigen Teile eines Lagersystems.

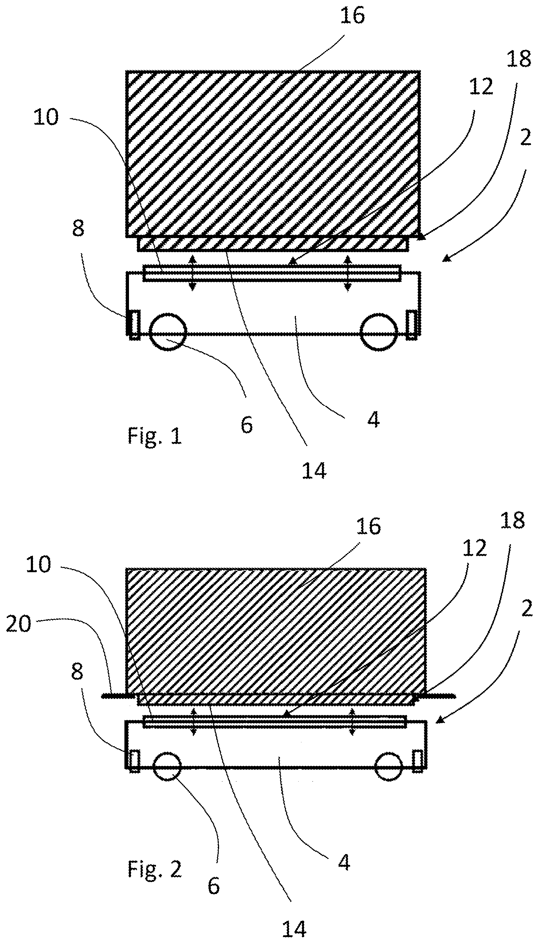

Fig. 1 zeigt einen selbstfahrenden Wagen 1 gemäß dem Stand der Technik zum automatischen Ein- und Auslagern von Behältern in einer Lagergestellanordnung. Der Wagen 1 weist einen Rahmen 4 mit einer Unterseite und einer Oberseite auf, wobei an der Unterseite ein erster Radsatz 6 zum Antrieb entlang einer ersten Achse x und ein zweiter Radsatz 8 zum Antrieb entlang einer quer zur ersten Achse x verlaufenden zweiten Achse y angeordnet ist. An der Oberseite ist ein anheb- und absenkbarer Hubtisch 10 mit einer Auflagefläche 12 zum Tragen einer Bodenfläche 14 eines Behälters 16 vorgesehen. Der Wagen 1 kann unter den Behälter 16 gefahren werden, um den Behälter 16 durch Anheben des Hubtischs 10 aufzunehmen. Wie in Fig. 2 gezeigt, kann der Behälter 16 mit einem Stapelrand 18 auf einer Aufstandsfläche 20 eines Lagergestells stehen, wobei der Wagen 1 so flach ausgebildet ist, dass er bei eingefahrenem Hubtisch 10 unter die Aufstandsfläche 20 verfahrbar ist.

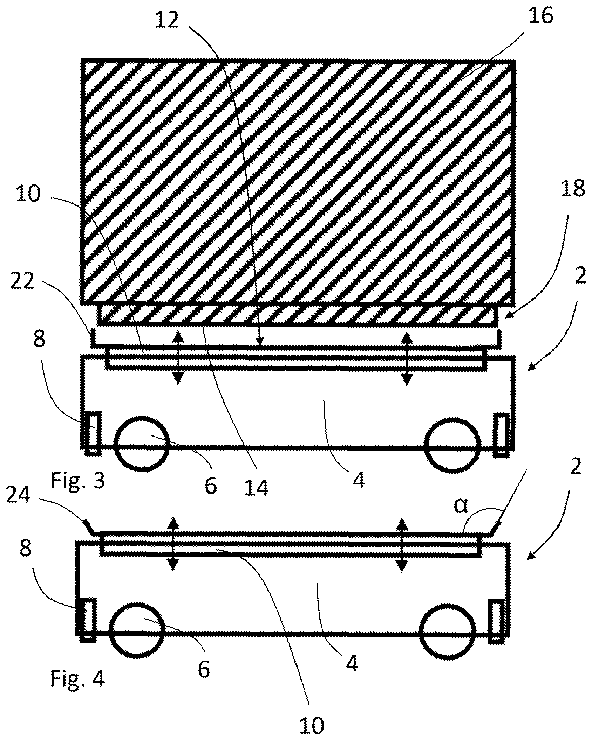

In Fig. 3 wird ein Ausführungsbeispiel eines hier nicht beanspruchten, selbstfahrenden Wagens 2 dargestellt, bei dem der Hubtisch 10 randseitig der Auflagefläche 12 im Wesentlichen senkrecht zu der Auflagefläche 12 abstehende Halteflächen 22 aufweist, die eine Haltevorrichtung 24 bilden. Diese umgreift den Stapelrand 18 des Behälters 16, sodass ein Herunterrutschen des Behälters 16 von der Auflagefläche 12 damit verhindert wird. Bei Schräglagen auf Rampen oder bei abrupten Beschleunigungen oder Bremsvorgängen wird der Stapelrand 18 an die Halteflächen 22 gedrängt und dort gehalten.

Fig. 4 zeigt ein hier ebenfalls nicht beanspruchtes Ausführungsbeispiel, bei dem Halteflächen 24 vorgesehen sind, die schräg zu der Auflagefläche 12 verlaufen und hier beispielhaft einen Winkel a von 135° zu ihr einschließen. Behälter, die durch Bewegen des Hubtischs 10 aufgenommen werden, werden durch die Halteflächen 24 stets in Richtung des Zentrums der Auflagefläche 12 bewegt, sollten Behälterkanten auf einer der Halteflächen 24 kontaktieren. Damit wird eine selbstzentrierende Anordnung realisiert, ohne dass die Behälter dafür an den Wagen angepasst sein müssen.

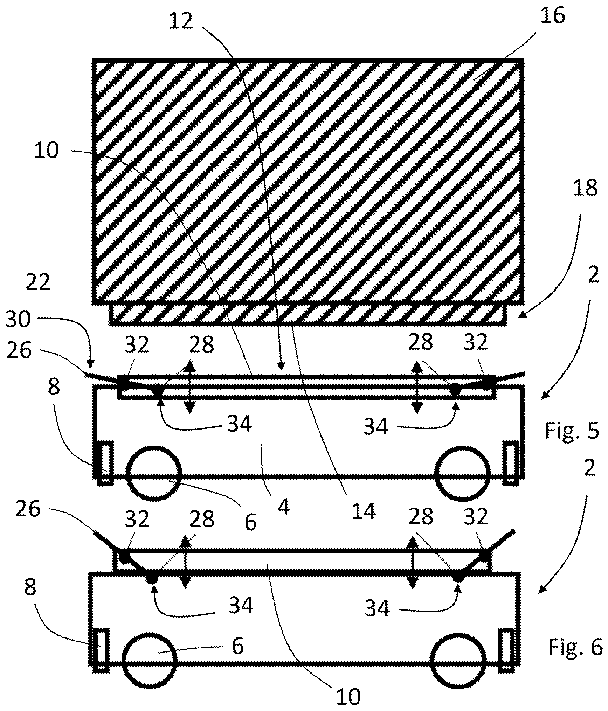

Fig. 5 zeigt ein beanspruchtes Ausführungsbeispiel, bei dem Halteflächen 26 schwenkbar an dem Wagen 2 gelagert sind. Hierzu weisen die Halteflächen 26 jeweils eine Innenkante 28 auf, die schwenkbar an dem Rahmen 4 gelagert ist. Zwischen der Innenkante 28 und einer davon entgegengesetzten Außenkante 30 der Halteflächen 26 ist jeweils eine Schwenkachse 32 angeordnet, an der die betreffende Haltefläche 26 schwenkbar an dem Hubtisch 10 gelagert ist. Die Innenkanten 28 sind mittels lateral verschiebbarer Schwenklager 34 an dem Rahmen 4 gelagert, sodass sie eine Ausgleichsbewegung in lateraler Richtung parallel zu einer Hauptebene des Rahmens 4 durchführen können, wenn die Schwenkachse 32 durch Bewegen des Hubtischs 10 ihre Lage verändert. An den Schwenkachsen 32 sind beispielhaft Schwenklager 36 mit fester Position vorgesehen, die mit dem Hubtisch 10 gekoppelt sind. Durch Ausfahren des Hubtischs 10 in vertikaler Richtung folgen die festen Schwenklager 34 der Position des Hubtischs 10 und die Innenkanten 28 gleiten zum Ausgleich lateral nach außen. Dies ist der Fig. 6 zu entnehmen. Die Halteflächen 26 stellen sich in dieser Halteposition schräg zu der Auflagefläche 12 auf und ragen über die Auflagefläche 12 hinaus. Sie nehmen dann eine Form ein, die etwa der aus Fig 4 entspricht.

Beim Zurückfahren des Hubtischs 10 nach unten gleiten die Innenkanten 28 lateral nach innen, während sich die Schwenkachsen 32 nach unten bewegen. Die Halteflächen 26 nehmen dann eine flachere Position ein, die in einer untersten Position zumindest annähernd waagerecht verlaufen können. Dies ist der Fig. 5 zu entnehmen und ist als Freigabeposition zu bezeichnen. Damit ist der Wagen 2 sehr flach und kann unter den Behälter 16 und unter eine Aufstandsfläche 20 verfahren werden. Die Halteflächen 26 ragen in der Freigabeposition im Wesentlichen nicht über die Auflagefläche 12 hinaus.

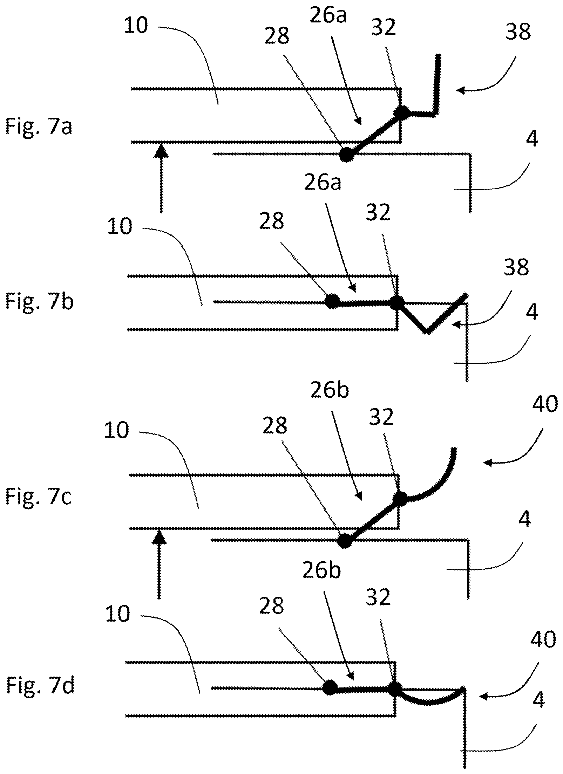

In den Fig. 7a bis 7d werden ebenfalls Abwandlungen der Haltefläche 26 gezeigt. Fig. 7a und 7b zeigen ein unbeanspruchtes Beispiel, bei welchem eine Haltefläche 26a, die einen von der Auflagefläche 12 abgewandten Bereich 38 aufweist, zur Auflagefläche 12 hin abgeknickt ist. Damit kann der Stapelrand 18 sehr gut umfasst werden, wobei dennoch eine sehr flache Freigabeposition realisierbar ist. In dem beanspruchten Beispiel der Fig. 7c und 7d wird indes ein von der Auflagefläche 12 abgewandter Bereich 40 einer Haltefläche 26b gezeigt, der zu der Auflagefläche 12 hin gewölbt ist. Hiermit wird ein ähnlicher Vorteil wie mit dem abgeknickten Bereich 38 erreicht.

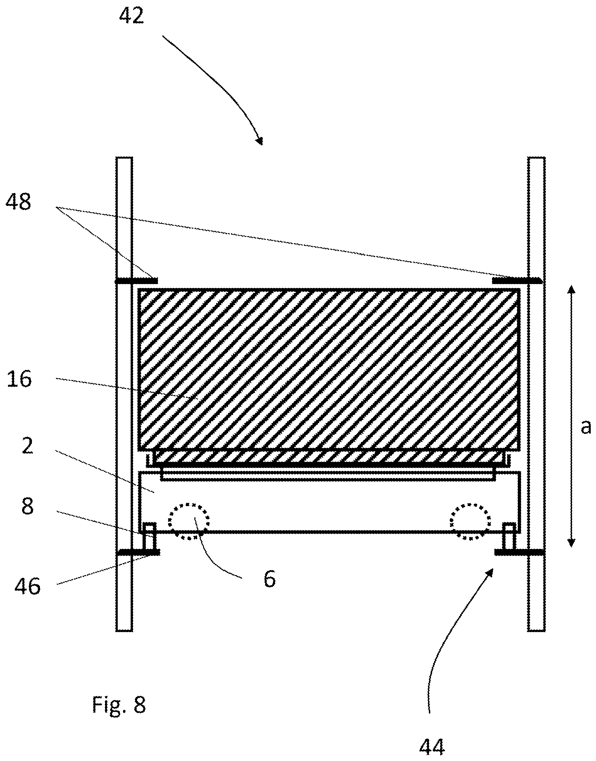

Fig. 8 zeigt eine zweidimensionale Darstellung eines Teils eines ebenfalls beanspruchten Lagersystems 42 rückwärtig auf einen Wagen 2 gerichtet, wobei das Lagersystem 42 eine Fahrtrassenanordnung 44 mit Fahrtrassensträngen 46 aufweist. Auf der Fahrtrassenanordnung 44 können die vorangehend dargestellten Wagen 2 fahren und dabei Behälter 16, die in einer hier nicht dargestellten Lagergestellanordnung abstellbar sind, bewegen. Die Fahrtrassenanordnung 44 umfasst geneigte Abschnitte, über denen Niederhalter 48 angeordnet sind. Diese weisen einen senkrecht zu dem jeweils darunterliegenden Fahrtrassenstrang 46 gemessenen Abstand a auf, der eine Höhe des betreffenden Wagens 2 mit dem darauf befindlichem Behälter 16 übersteigt, sodass der Wagen 2 und der Behälter 16 bei vollständig auf dem Fahrtrassenstrang 46 befindlichem Wagen 2 und vollständig auf dem Wagen 2 aufliegendem Behälter 16 ohne Anstoßen des Niederhalters 48 verfahren werden können. Sollte jedoch aufgrund der schrägen Ausrichtung des Fahrtrassenstrangs 46 der Behälter 16 kippen, wird die abhebende Kante den Niederhalter 48 berühren, sodass die Kippbewegung begrenzt wird. In diesem Ausführungsbeispiel ist der Abstand zwischen den Niederhaltern 48 und einer Oberseite des Behälters 16 sehr gering und es wird lediglich eine minimale Kippbewegung toleriert. Es ist jedoch denkbar, dass Kippbewegungen von bis zu 20° zu der Oberseite bzw. der Auflagefläche des Wagens 2 toleriert werden können.

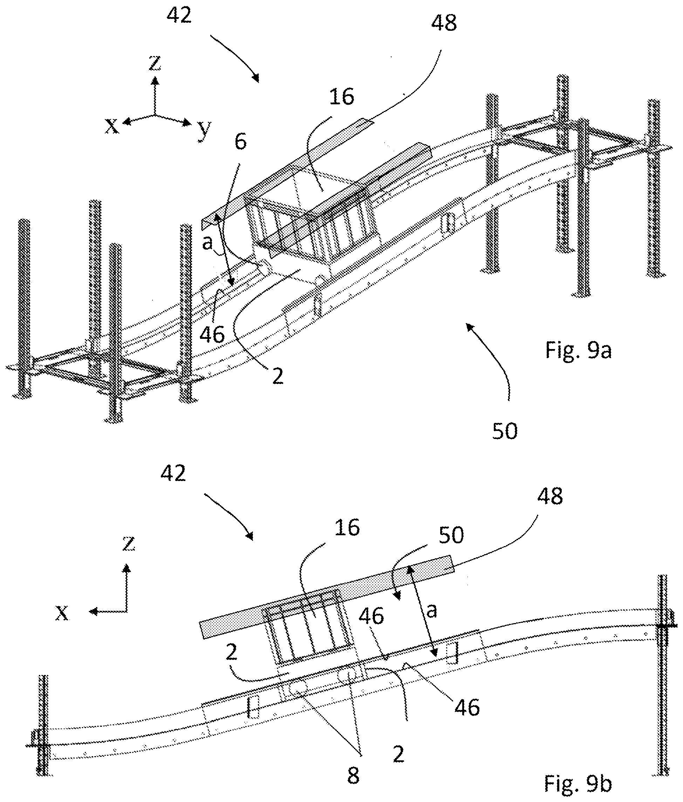

In Fig. 9a und 9b wird dies in weiteren Ansichten dargestellt. Fig. 9a zeigt in einer dreidimensionalen Darstellung einen geneigten Abschnitt 50 in der Fahrtrassenanordnung 44, oberhalb dem in Fahrtrichtung beidseitig Niederhalter 48 angeordnet sind, um eine Kippbewegung des Behälters 16 beim Verfahren des Wagens 2 zu begrenzen. Fig. 9b zeigt dies in einer Seitenansicht.

### Bezugszeichenliste

- 1: selbstfahrender Wagen (Stand der Technik)
- 2: selbstfahrender Wagen
- 4: Rahmen
- 6: erster Radsatz
- 8: zweiter Radsatz
- 10: Hubtisch
- 12: Auflagefläche
- 14: Bodenfläche
- 16: Behälter
- 18: Stapelrand
- 20: Aufstandsfläche
- 22: Haltefläche
- 24: Haltefläche
- 26, 26a, 26b: Haltefläche
- 28: Innenkante
- 30: Außenkante
- 32: Schwenkachse
- 34: verschiebbares Schwenklager
- 36: festes Schwenklager
- 38: abgeknickter Bereich
- 40: gewölbter Bereich
- 42: Lagersystem
- 44: Fahrtrassenanordnung
- 46: Fahrtrassenstrang
- 48: Niederhalter
- 50: geneigter Abschnitt
- α: Winkel
- a: Abstand

## Patentansprüche

1. Selbstfahrender Wagen (2) zum automatischen Ein- und Auslagern von Behältern (16) in einer Lagergestellanordnung,
wobei der Wagen (2) einen Rahmen (4) mit einer Unterseite und einer Oberseite aufweist,
wobei der Wagen (2) an der Unterseite einen ersten Radsatz (6) zum Antrieb entlang einer ersten Achse und einen zweiten Radsatz (8) zum Antrieb entlang einer quer zur ersten Achse verlaufenden zweiten Achse aufweist, und
wobei der Wagen (2) an der Oberseite einen anheb- und absenkbaren Hubtisch (10) mit einer Auflagefläche (12) zum Tragen einer Bodenfläche (14) eines Behälters (16) aufweist,
wobei der Wagen (2) eine Haltevorrichtung mit randseitig an der Auflagefläche (12) angrenzenden Halteflächen (22, 24, 26) aufweist, die zumindest teilweise und zumindest zeitweise von der Auflagefläche (12) abstehen, **dadurch gekennzeichnet, dass** mindestens eine der Halteflächen (22, 24, 26) bewegbar gelagert und in eine Freigabeposition und eine Halteposition bringbar ist, die mindestens eine der Halteflächen (22, 24, 26) in der Halteposition über die Auflagefläche (12) ragt und einen Winkel (a) von mindestens 120° und höchstens 165° zu der Auflagefläche (12) einschließt, und die mindestens eine der Halteflächen (22, 24, 26) in der Freigabeposition im Wesentlichen nicht über die Auflagefläche (12) ragt.

2. Selbstfahrender Wagen (2) nach Anspruch 1, **dadurch gekennzeichnet, dass** die mindestens eine der Halteflächen (22, 24, 26) jeweils eine Außenkante (30) und eine Innenkante (28) aufweist, und die Außenkante (30) zum Einnehmen der Halteposition gegenüber der Innenkante (28) anhebbar ist.

3. Selbstfahrender Wagen (2) nach Anspruch 2, **dadurch gekennzeichnet, dass** mindestens eine der Halteflächen (22, 24, 26) an ihrer jeweiligen Innenkante (28) schwenkbar mit dem Rahmen (4) verbunden ist.

4. Selbstfahrender Wagen (2) nach einem der vorhergehenden Ansprüche, **dadurch gekennzeichnet, dass** die mindestens eine der Halteflächen (22, 24, 26) bewegbar mit dem Rahmen (4) und dem Hubtisch (10) gekoppelt ist, sodass sie beim Anheben des Hubtischs (10) in die Halteposition und beim Absenken des Hubtischs (10) in die Freigabeposition bewegt wird.

5. Selbstfahrender Wagen (2) nach Anspruch 4, **dadurch gekennzeichnet, dass** die mindestens eine der Halteflächen (22, 24, 26) jeweils eine Schwenkachse (32) aufweist, die zwischen der jeweiligen Innenkante (28) und der Außenkante (30) liegt, und die mindestens eine der Halteflächen (22, 24, 26) an der Schwenkachse (32) mit dem Hubtisch (10) schwenkbar gelagert ist.

6. Selbstfahrender Wagen (2) nach Anspruch 4 oder 5, **dadurch gekennzeichnet, dass** die jeweilige Innenkante (28) jeweils mittels mindestens eines lateral verschiebbaren Schwenklagers (34) an dem Rahmen (4) angeordnet ist.

7. Selbstfahrender Wagen (2) nach Anspruch 5, **dadurch gekennzeichnet, dass** die mindestens eine der Halteflächen (22, 24, 26) jeweils mittels mindestens eines lateral verschiebbaren Schwenklagers (34) an dem Hubtisch (10) schwenkbar gelagert ist.

8. Selbstfahrender Wagen (2) nach einem der vorhergehenden Ansprüche, **dadurch gekennzeichnet, dass** mindestens eine der Halteflächen (22, 24, 26) mittels einer an dem Rahmen (4) angeordneten Bewegungsvorrichtung verschwenkbar ist.

9. Selbstfahrender Wagen (2) nach einem der vorhergehenden Ansprüche, **dadurch gekennzeichnet, dass** an zumindest zwei einander entgegengesetzten Seiten der Auflagefläche (12) Halteflächen (22, 24, 26) vorgesehen sind, wobei die Auflagefläche (12) und die Halteflächen (22, 24, 26) zumindest zeitweise eine sich nach oben aufweitende Wanne bilden.

10. Selbstfahrender Wagen (2) nach einem der vorhergehenden Ansprüche, **dadurch gekennzeichnet, dass** mindestens eine der Halteflächen (22, 24, 26) an einem von der Auflagefläche (12) abgewandten Bereich (38, 40) zu der Auflagefläche (12) hin abgeknickt oder gewölbt ist.

11. Lagersystem (42), aufweisend:
- eine Fahrtrassenanordnung (44) mit mehreren Fahrtrassensträngen (46),
- auf der Fahrtrassenanordnung (44) selbstfahrende Wagen (2) nach einem der vorhergehenden Ansprüche zum automatischen Ein- und Auslagern von Behältern (16) in einer mit der Fahrtrassenanordnung (44) koppelbaren Lagergestellanordnung, und
- auf den selbstfahrenden Wagen (2) platzierbare Behälter (16), die in der Lagergestellanordnung abstellbar sind.

12. Lagersystem (42) nach Anspruch 11, **gekennzeichnet durch** mindestens einen Niederhalter (48), der zumindest teilweise oberhalb von mindestens eines geneigten Abschnitts (50) von mindestens einem der Fahrtrassenstränge (46) angeordnet ist, wobei ein senkrecht zu dem mindestens einen Fahrtrassenstrang (46) gemessener Abstand (a) zwischen dem Fahrtrassenstrang (46) und dem mindestens einen Niederhalter (48) eine Höhe des betreffenden Wagens (2) mit darauf befindlichem Behälter (16) nur derart übersteigt, dass der betreffende Behälter (16) um einen Winkel von höchstens 20° zu der Auflagefläche (12) kippen kann, ohne an dem mindestens einen Niederhalter (48) anzustoßen.

13. Lagersystem (42) nach Anspruch 12, **gekennzeichnet dadurch, dass** die Fahrtrassenanordnung (44) Fahrtrassenstränge (46) in verschiedenen Etagen aufweist, wobei der mindestens eine Niederhalter (48) von einer Unterseite eines Fahrtrassenstrangs (46) einer über dem mindestens einen Fahrtrassenstrang (46) verlaufenden Etage gebildet wird.

## Claims

1. A self-propelled cart (2) for automatically loading and unloading containers (16) in a storage rack assembly,
wherein the cart (2) comprises a chassis (4) with a bottom side and a top side,
wherein the cart (2) comprises, on the bottom side, a first set of wheels (6) for propulsion along a first axis and a second set of wheels (8) for propulsion along a second axis extending transversely to the first axis, and
wherein the cart (2) comprises, on the top side, a lifting table (10) that can be raised and lowered and has a bearing surface (12) for supporting a bottom surface (14) of a container (16),
wherein the cart (2) comprising a retaining device with retaining surfaces (22, 24, 26) that adjoin the edge of the bearing surface (12) and at least partially and at least temporarily protrude from the bearing surface (12), **characterized in that** at least one of the retaining surfaces (22, 24, 26) is movably mounted and can be moved into a release position and a retaining position, wherein the at least one of the retaining surfaces (22, 24, 26) protrudes beyond the bearing surface (12) and includes an angle (α) of at least 120° and no more than 165° with the bearing surface (12) in the retaining position, and wherein the at least one of the retaining surfaces (22, 24, 26) essentially does not protrude beyond the bearing surface (12) in the release position.

2. The self-propelled cart (2) according to claim 1, **characterized in that** the at least one of the retaining surfaces (22, 24, 26) respectively has an outer edge (30) and an inner edge (28), and **in that** the outer edge (30) can be raised relative to the inner edge (28) in order to assume the retaining position.

3. The self-propelled cart (2) according to claim 2, **characterized in that** at least one of the retaining surfaces (22, 24, 26) is connected to the chassis (4) in a pivotable manner on its respective inner edge (28).

4. The self-propelled cart (2) according to one of the preceding claims, **characterized in that** the at least one of the retaining surfaces (22, 24, 26) is movably coupled to the chassis (4) and the lifting table (10) such that it is moved into the retaining position when the lifting table (10) is raised and moved into the release position when the lifting table (10) is lowered.

5. The self-propelled cart (2) according to claim 4, **characterized in that** the at least one of the retaining surfaces (22, 24, 26) respectively has a pivoting axis (32) that lies between the respective inner edge (28) and the outer edge (30), and **in that** the at least one of the retaining surfaces (22, 24, 26) is mounted on the lifting table (10) in a pivotable manner at the pivoting axis (32).

6. The self-propelled cart (2) according to claim 4 or 5, **characterized in that** the respective inner edge (28) is respectively arranged on the chassis (4) by means of at least one laterally displaceable pivot bearing (34).

7. The self-propelled cart (2) according to claim 5, **characterized in that** the at least one of the retaining surfaces (22, 24, 26) is respectively mounted on the lifting table (10) in a pivotable manner by means of at least one laterally displaceable pivot bearing (34).

8. The self-propelled cart (2) according to one of the preceding claims, **characterized in that** at least one of the retaining surfaces (22, 24, 26) is pivotable by means of a moving device arranged on the chassis (4).

9. The self-propelled cart (2) according to one of the preceding claims, **characterized in that** retaining surfaces (22, 24, 26) are provided on at least two opposite sides of the bearing surface (12), wherein the bearing surface (12) and the retaining surfaces (22, 24, 26) at least temporarily form a trough that widens upward.

10. The self-propelled cart (2) according to one of the preceding claims, **characterized in that** at least one of the retaining surfaces (22, 24, 26) is bent or curved toward the bearing surface (12) in a region (38, 40) facing away from the bearing surface (12).

11. A storage system (42) comprising:
- a track arrangement (44) with multiple track sections (46),
- carts (2) according to one of the preceding claims, which move along the track arrangement (44) in a self-propelled manner and serve for automatically loading and unloading containers (16) in a storage rack assembly that can be coupled to the track arrangement (44), and
- containers (16) that can be placed on the self-propelled carts (2) and deposited in the storage rack assembly.

12. The storage system (42) according to claim 11, **characterized by** at least one holding-down device (48) that is at least temporarily arranged above at least one inclined segment (50) of at least one of the track sections (46), wherein a distance (a) between the track section (46) and the at least one holding-down device (48), which is measured perpendicular to the at least one track section (46), only exceeds a height of the respective cart (2) with the container (16) located thereon in such a way that the respective container (16) can tilt relative to the bearing surface (12) by an angle of no more than 20° without abutting on the at least one holding-down device (48).

13. The storage system (42) according to claim 12, **characterized in that** the track arrangement (44) comprises track sections (46) on different levels, wherein the at least one holding-down device (48) is formed by a bottom side of a track section (46) of a level extending above the at least one track section (46).

## Revendications

1. Chariot automoteur (2), destiné au stockage et au déstockage automatiques de conteneurs (16) dans un ensemble de rayonnages de stockage,
le chariot (2) comportant un châssis (4), doté d'une face inférieure et d'une face supérieure,
le chariot (2) comportant sur la face inférieure un premier jeu de roues (6), destiné à l'entraînement le long d'un premier axe et un deuxième jeu de roues (8), destiné à l'entraînement le long d'un deuxième axe, s'écoulant à la transversale du premier axe et
le chariot (2) comportant sur la face supérieure une table élévatrice (10), susceptible de se relever et de s'abaisser, dotée d'une surface d'appui (12), destinée à porter une surface de fond (14) d'un conteneur (16),
le chariot (2) comportant un dispositif de maintien, doté de surfaces de maintien (22, 24, 26) adjacentes par un bord à la surface d'appui (12), qui font saillie au moins partiellement et au moins temporairement par rapport à la surface d'appui (12), **caractérisé en ce qu'**au moins l'une des surfaces de maintien (22, 24, 26) est montée de manière déplaçable et est susceptible d'être amenée dans une position de libération et dans une position de maintien, **en ce que**, dans la position de maintien, l'au moins une des surfaces de maintien (22, 24, 26) fait-saillie au-delà de la surface d'appui (12) et inclut un angle (α) d'au moins 120 ° et d'au plus 165 ° par rapport à la surface d'appui (12) et dans la position de libération, l'au moins une des surfaces de maintien (22, 24, 26) ne fait sensiblement pas saillie au-delà de la surface d'appui (12).

2. Chariot automoteur (2) selon la revendication 1, **caractérisé en ce que** l'au moins une des surfaces de maintien (22, 24, 26) comporte respectivement une arête extérieure (30) et une arête intérieure (28) et l'arête extérieure (30) est relevable par rapport à l'arête intérieure (28), pour adopter la position de maintien.

3. Chariot automoteur (2) selon la revendication 2, **caractérisé en ce que** sur son arête intérieure (28) respective, au moins l'une des surfaces de maintien (22, 24, 26) est assemblée avec le châssis (4) de manière à pouvoir pivoter.

4. Chariot automoteur (2) selon l'une quelconque des revendications précédentes, **caractérisé en ce que** l'au moins une des surfaces de maintien (22, 24, 26) est accouplée de manière déplaçable avec le châssis (4) et la table élévatrice (10), de sorte à être déplacée lors du relèvement de la table élévatrice (10) dans la position de maintien et lors de l'abaissement de la table élévatrice (10) dans la position de libération.

5. Chariot automoteur (2) selon la revendication 4, **caractérisé en ce que** l'au moins une des surfaces de maintien (22, 24, 26) comporte respectivement un axe de pivotement (32) qui se situe entre l'arête intérieure (28) respective et l'arête extérieure (30) et **en ce que** l'au moins une des surfaces de maintien (22, 24, 26) est montée de manière à pouvoir pivoter sur l'axe de pivotement (32) avec la table élévatrice (10).

6. Chariot automoteur (2) selon la revendication 4 ou 5, **caractérisé en ce que** l'arête intérieure (28) respective est respectivement placée sur le châssis (4) au moyen d'au moins un palier pivotant (34) susceptible de coulisser latéralement.

7. Chariot automoteur (2) selon la revendication 5, **caractérisé en ce que** l'au moins une des surfaces de maintien (22, 24, 26) est montée de manière à pouvoir pivoter sur la table élévatrice (10), respectivement au moyen d'au moins un palier pivotant (34) susceptible de coulisser latéralement.

8. Chariot automoteur (2) selon l'une quelconque des revendications précédentes, **caractérisé en ce qu'**au moins l'une des surfaces de maintien (22, 24, 26) est susceptible de pivoter au moyen d'un dispositif de déplacement disposé sur le châssis (4).

9. Chariot automoteur (2) selon l'une quelconque des revendications précédentes, **caractérisé en ce que** sur au moins deux côtés opposés l'un à l'autre de la surface d'appui (12) sont prévues des surfaces de maintien (22, 24, 26), la surface d'appui (12) et les surfaces de maintien (22, 24, 26) constituant au moins partiellement une cuve s'évasant vers le haut.

10. Chariot automoteur (2) selon l'une quelconque des revendications précédentes, **caractérisé en ce que** dans une zone (38, 40) détournée de la surface d'appui (12), au moins l'une des surfaces de maintien (22, 24, 26) est coudée ou bombée en direction de la surface d'appui (12).

11. Système de stockage (42), comportant :
- une configuration (44) de voies de circulation, dotée de plusieurs tronçons (46) de voies de circulation,
- des chariot (2) selon l'une quelconque des revendications précédentes, roulant de manière autonome sur la configuration (44) de voies de circulation, destinés au stockage et au déstockage automatiques de conteneurs (16) dans un ensemble de rayonnages de stockage susceptible d'être accouplé avec la configuration (44) de voies de circulation et
- des conteneurs (16), susceptibles d'être placés sur les chariots (2) automoteurs, qui sont susceptibles d'être déposés dans l'ensemble de rayonnages de stockage.

12. Système de stockage (42) selon la revendication 11, **caractérisé par** au moins un élément de retenue (48), qui est disposé au moins partiellement au-dessus d'au moins une section (50) inclinée d'au moins l'un des tronçons (46) de voies de circulation, un écart (a), mesuré à la perpendiculaire de l'au moins un tronçon (46) de voies de circulation entre le tronçon (46) de voies de circulation et l'au moins un élément de retenue (48) ne dépassant une hauteur du chariot (2) concerné avec des conteneurs (16) posés dessus que de telle sorte que le conteneur (16) concerné puisse basculer d'un angle d'au plus 20 ° par rapport à la surface d'appui (12), sans entrer en collision avec l'au moins un élément de retenue (48).

13. Système de stockage (42) selon la revendication 12, **caractérisé en ce que** la configuration (44) de voies de circulation comporte des tronçons (46) de voies de circulation à différents étages, l'au moins un élément de retenue (48) étant constitué par une face inférieure d'un tronçon (46) de voies de circulation d'un étage s'écoulant par-dessus l'au moins un tronçon (46) de voies de circulation.
